# EUROPEAN PATENT SPECIFICATION

(11) **EP 0 480 053 B1**
(45) Date of publication and mention of the grant of the patent: **05.11.1997**
(21) Application number: 91906583.9
(22) Date of filing: 29.03.1991
(51) Int. Cl.: F16L 47/02, B29C 65/36

(54) **ELECTRICALLY FUSION-BONDED JOINT**
ELEKTROSCHWEISSVERBINDUNG
JOINT FORME PAR FUSION ELECTRIQUE

(30) Priority: 30.03.1990 JP 86847/90
(43) Date of publication of application: 15.04.1992
(73) Proprietor: Kubota Corporation, Osaka-shi, Osaka 556-91 (JP); UPONOR ALDYL COMPANY, New Castle, Delaware 19720-1618 (US)
(72) Inventor: GOTO, Yuichiro, Kubota Corporation, Sakai-shi Osaka 590 (JP); KASA, Hideki, Kubota Corporation, Sakai-shi Osaka 590 (JP); HARADA, Takatomo, Kuboto Corporation, Sakai-shi Osaka 590 (JP)
(74) Representative: Lunt, Mark George Francis
(86) International application number: PCT/JP91/00412
(87) International publication number: WO 91/15706

(56) References cited:
- EP-A- 0 402 200
- WO-A-80/02124
- WO-A-81/02405
- WO-A-91/09247
- DE-A- 3 217 300
- DE-B- 1 086 426
- DE-C- 802 282
- FR-A- 1 493 562
- FR-A- 2 439 930
- JP-A-54 058 777
- JP-A-61 109 996
- JP-A-62 050 122
- JP-A-63 272 535
- US-A- 2 739 829
- US-A- 3 620 876
- US-A- 4 256 945
- PATENT ABSTRACTS OF JAPAN vol. 9, no. 158 (M-393)(1881) 3 July 1985 & JP-A-60 32 632 (MASUJIA YASUDA)

## Description

This invention pertains to an electric fusion coupling. More specifically, it pertains to an electric fusion coupling which is utilised to connect synthetic resin pipes etc.

An example of prior electric fusion couplings used to connect pipes made of polyethylene, polybutene and other synthetic resins is disclosed in US-A-4, 117,311 and US-A-4 486,650.

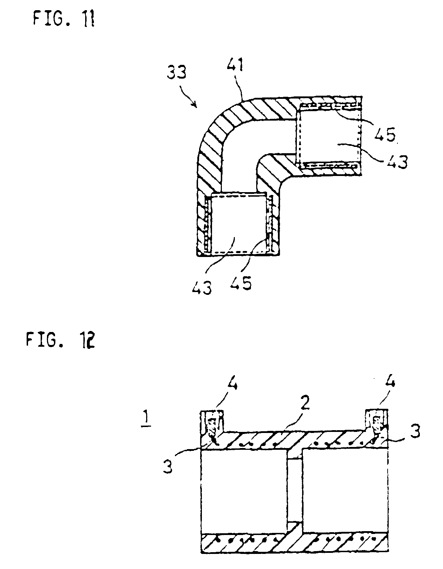

As indicated in Fig. 12, an electric fusion coupling 1 of the prior art includes a body 2 which is a hollow cylindrical pipe made of synthetic resin. Buried in the inner section of the body 2 is the electric hearing wire 3, while both ends of the electric heating wire 3 are attached to the terminals 4 which project from the body 2.

In such an electric fusion coupling 1 of the prior art, there were problems in manufacturing since terminals 4 have to be shaped in both end sections of the electric heating wire 3.

Moreover, since the heating was accomplished by the electric heating wire 3, the temperature control was difficult, and there easily emerged a temperature unevenness, which constituted another problem.

EP-A-0458957 (relevant under Article 54(3) EPC) describes a structure for joining plastics members in the form of a sleeve positionable around part of a member, the sleeve including high mu material heating means embedded therein for causing fusion of the sleeve and the member. The heating means may comprise one or more bands, a plurality of rings or corrugated strips.

WO-A-80/02124 describes a method of joining two pipes in which ferromagnetic material is located in a region of the joint to be formed. The surrounding pipe material is melted to produce the joint. The ferromagnetic material may be in the form of a band of conductive material in the form of either a polymer with metal powder therethrough or a perforated ferromagnetic alloy. In any event, the heating element so-formed is embedded (at least in one embodiment thereof) in a surface of the coupling. In all embodiments a surface of the heating element is exposed.

A main purpose of this invention is to offer a new electric fusion coupling.

Another purpose of this invention is to offer an electric fusion coupling which would be simple in manufacturing.

Another purpose of this invention is to offer an electric fusion coupling that does not generate temperature unevenness.

Still another purpose of this invention is to offer an electric fusion coupling which uses a magnetic alloy body as a heater.

An electric fusion coupling for connecting plastic members formed from a first plastics material with a first fusion temperature and having a first connecting surface comprises a connecting body formed from a second plastics material with a second fusion temperature and having a second connecting surface similarly curved to the first connecting surface whereby the second connecting surface of the connecting body can be positioned closely adjacent the first contacting surface of a member to which it is to be joined to provide a length of overlap therebetween and a temperature self-regulating heating means fully embedded in the connecting body adjacent the second connecting surface for heating the body and the member to which it is to be joined to their fusion temperatures whereby an extensive region of the length of overlap of the connecting body and the member are fused to one another, the heating means including a magnetic alloy body with a high Curie temperature equal to or above the first and second fusion temperatures and being in the form of either a punched sheet or a mesh.

The invention is therefore distinguished from WO-A-80/02124 by virtue of the total embedding of the heating element in the body of the coupling and the extensive amount of the overlap between the coupling and member which is covered by the heating element.

An electric fusion coupling according to this invention connects members to be connected made from the first synthetic resin, and is equipped with the following: the main body which is made of the second synthetic resin and has the second joining surface which has practically the same curve as the first joining surface, while the above-mentioned first and second synthetic resins have their respective first and second melting temperatures; a heater which includes a magnetic alloy body, the aforesaid magnetic alloy body having a high Curie temperature equal to or higher than the melting temperatures of the first and second synthetic resins. The heater is buried, eg in the vicinity of the second joining surface of the body. The Curie temperature of the magnetic alloy that makes up the heater is established (as an optimal temperature) slightly higher than the melting temperatures of the first and second synthetic resins.

The second joining surface of the body follows one of the joining surfaces of the heater joining member. In this situation, when a high frequency current is applied by magnetic induction to the magnetic alloy which makes up the heater, the magnetic layer is heated by the skin effect, the temperature of the magnetic alloy body and hence of the heater is increased. Thereupon, if the temperature of the heater reaches the Curie temperature, the magnetic permeability of the magnetic alloy body rapidly decreases, the current is almost entirely discontinued, and the temperature of the magnetic alloy body, ie the heater, no longer increases. If the temperature of the heater is reduced by heat conduction, then the magnetic permeability of the magnetic alloy body is increased, and an electric current again flows in the magnetic alloy body. Since such actions are recurrent, the temperature of the magnetic alloy body, ie the heater, is maintained actually at a constant level, that of the Curie temperature. Consequently, the first and the second joining surfaces are heated to the Curie temperature or to a value close to it, ie to the optimal temperature, the members to be connected and the first and the second joining surfaces of the body as well as its surroundings are melted, and the member to be connected and the body are fused.

The above-mentioned purposes of this invention, as well as its other purposes, characteristic features, aspects and advantages will become clearer from the following detailed explanation of a practical example which is provided in conjunction with the attached drawings, in which:
Fig. 1 is a cross-section which shows a practical example of a coupling;
Fig. 2 is a cross-section which shows the situation of the coupling of the Practical Example of Fig. 1;
Fig. 3 - Fig. 8 are cross-sections which show different modified examples of heaters, Fig. 6 - Fig 8 being in accordance with the present invention;
Fig. 9 is an oblique view which shows another practical example;
Fig. 10 A and 10 B serve to explain another practical example, Fig. 10 A being a cross-section, while Fig. 10 B shows the bottom surface;
Fig. 11 is a cross-section which shows another practical example; and
Fig. 12 is a cross-section which shows prior art.

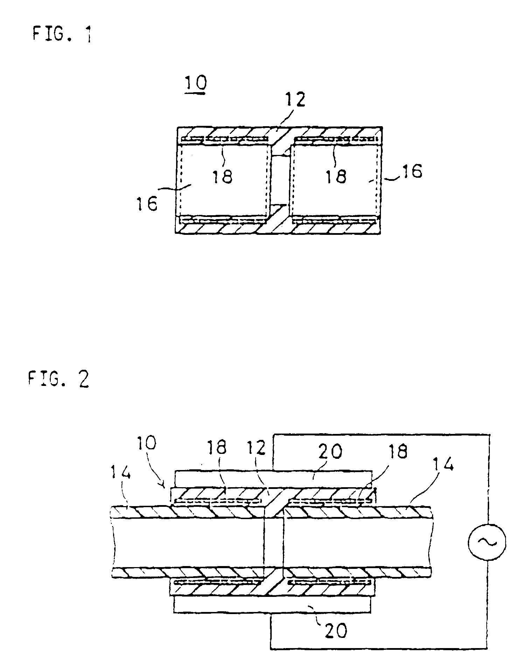

Referring to Fig. 1, the electric fusion coupling 10 of this practical example includes a hollow cylindrical body 10 made of polyethylene and other synthetic resins. The hollow inside of the body 12 acts as a socket 16 which accepts the pipe 14 mentioned below. Close to the inner surface of the socket 16, ie the joining surface (the second joining surface) there is buried a cylindrical magnetic alloy body 18. The magnetic alloy body 18 acts as a heater; it has a fixed Curie temperature. Such a magnetic alloy body 18 can be the magnetic alloy body disclosed in US-A-4, 256, 945. The Curie temperature of the magnetic alloy body 18 can be adjusted by varying the composition ratio of the components which constitute the alloy. The Curie temperature is established at the optimal temperature of the coupling. Of course, this optimal temperature varies according to the particular kind of the first synthetic resin used in the pipe 14 to be connected and of the second synthetic resin used in the body 12.

Referring to Fig. 2, the pipe 14 made of polyethylene, polybutene and/or other synthetic resin is inserted into socket 16 on the right and left of the electric fusion coupling, and then a high frequency electric current is applied by electric inductance to the magnetic alloy body 18 buried inside the coupling 10 using a high frequency power source. Then, the magnetic alloy body 18 is heated rapidly, since due to the skin effect, the electric current is only concentrated in the skin section. When the temperature of the magnetic alloy body 18 is increased and reaches the Curie temperature, its magnetic permeability diminishes rapidly so that the skin current is discontinued, thus the heating of the magnetic alloy body 18 becomes exceedingly small. When the heat of the magnetic alloy body 18 propagates to the body 12 and the pipe 14, reducing the temperature of the magnetic alloy body 18, the magnetic alloy body 18 is again heated by the skin current. Consequently, the magnetic alloy body 18, ie, the heater, maintains an almost constant temperature which is the Curie temperature or close to it. Thus, the joining surfaces of the body 12 and pipe 14 as well as the synthetic resin in their vicinity are melted and the two become fused.

The high frequency power source that can be used can be, eg, the high frequency power source disclosed in US-A-4, 769, 519.

According to this practical example, a high frequency current is applied to the magnetic alloy body 18 by means of electromagnetic induction. Therefore the electric fusion coupling 10 can be manufactured easily without any need to shape welding terminals.

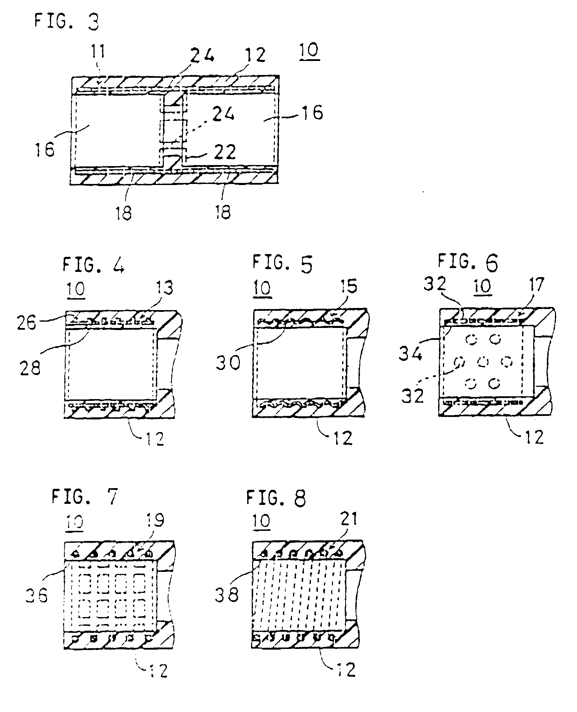

In the practical example indicated in Fig. 3, the heater 11 is used which connects in series the left and right magnetic alloy bodies 18 in the practical example of Fig. 1 by means of a connecting section 24. In order for the connecting section 24 to prevent the central part 22 of the body 12 from melting as efficiently as possible, it is shaped partly around the body 12. By connecting the two magnetic alloy bodies 18 by means of such a connecting section 24, it is ensured that the positions of both magnetic alloy bodies 18 are not dislocated along the diameter of the body 12, therefore the fusion is accomplished with more reliability.

The heater 13 shown in Fig. 4 includes the magnetic alloy body 28, cylindrical (or planar) in shape. On the external surface of (or internal surface of) the magnetic alloy body 28, there are a number of projecting lines 26 extending along the circumference. These projecting lines 26 have a double function, ie, preventing separation between a magnetic alloy body 28 and the body 12, and expanding the heating area.

The heater 15 shown in Fig. 5 includes a cylindrical magnetic alloy body 30 shaped by a wave plate. The reason why this magnetic alloy body 30 is constituted by a wave plate is the same as in the practical example of Fig. 4.

In the practical example indicated in Fig. 6 which is in accordance with the invention, the heater 17 is constituted by a magnetic alloy body 34 shaped by punching metal; ie, there are a number of pierced holes 32 on the lateral surface of the magnetic alloy body 34. These pierced holes 32 are efficient to prevent separation between the magnetic alloy body 34 and the body 12. That is, since the synthetic resin of the body 12 involves the magnetic alloy body 34 via the pierced holes 32, separation between the two of them can be prevented.

If a sufficient aperture ratio is not obtained in the punched metal shown in Fig. 6, in another embodiment of the invention a heater 19 can be used which is constituted by the mesh-shaped magnetic alloy body 36 indicated in Fig. 7. Thus the introduction of the synthetic resin of the body 12 is promoted via these apertures, while separation between the mesh magnetic alloy body 36 and the body itself can be further prevented.

The practical examples shown in Figs. 6 and 7 are advantageous in that they enable one to reduce the amount of magnetic alloy.

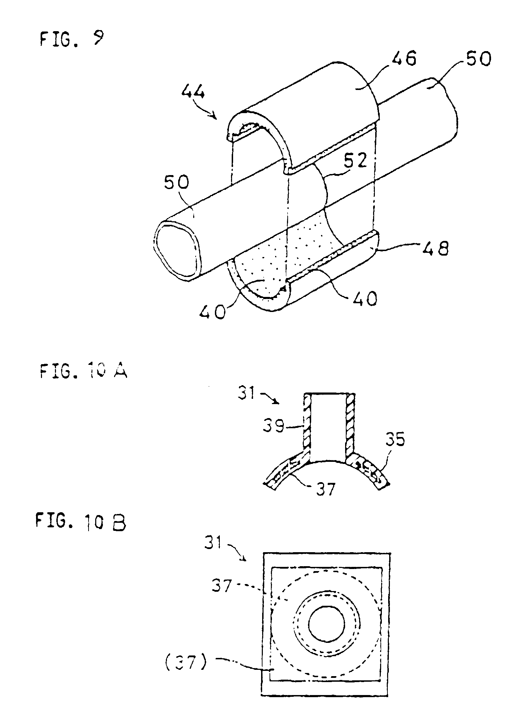

Fig. 8 shows the use of a heater 21 made of a coil-shaped magnetic alloy body 38.

In the practical examples indicated in Figs. 1 - 8, the electric fusion coupling 10 was obtained by injection molding of the body so as to mold the magnetic alloy body inside the body. But the shape of the magnetic alloy body can be further modified.

This invention can be applied to the joining of a variety of pipe members: a socket 44 divided in two pieces as indicate in Fig. 9, a saddle 31 as indicated in Fig. 10 A and 10 B, or an elbow 33 as indicated in Fig. 11, and other tees, reducers, etc., not shown in the accompanying drawings.

The two-section socket 44 indicated in Fig. 9 consists of the top section 46 and bottom section 48. In the case shown, and outside the scope of the invention, magnetic alloy powder is kneaded into the sections close to their respective inner surfaces. During the joining, the pipe 50 is held on both sides by the top and bottom pieces of the two-piece socket 44 in such a way as to bring the extremities of the two pipes 50 to be connected butt to butt and place the confronting sections 52 in vacuum. The top and bottom pieces are fixed by a clamp tool, and a high frequency current is applied to the magnetic alloy powder 40. In this way, the magnetic alloy powder 40 is heated and the top and bottom pieces of the two-piece socket 44 become fused, while the pipe 50 can be connected at the same time.

If this two-piece socket 44 is used, the time required to insert the pipe 50 into the coupling socket is reduced, therefore the manufacturing efficiency can be increased, which is especially advantageous for large diameter pipes which are becoming increasingly important. In this practical example, too, any of the heaters of the practical examples of Figs. 1 - 8 can be used.

The saddle 31 shown in Fig. 10 A and 10 B includes a seating section 35. On the inside surface of the seating section 35, ie, in the vicinity of the joining surface, in a position indicated by a two-dash line in Fig. 10 B, a heater 37 is shaped according to any of the previous practical examples. In the centre of the seating section 35 there is shaped a branch pipe 39. In this practical example, too, the heater 37 can be heated by an induced high frequency current.

The elbow 33 shown in Fig. 11 includes a body 41, in the vicinity of the inner surface of the socket 43, there is shaped a heater 45 according to any of the previous examples. In this Practical Example, as well, the heater 45 can be heated by an induced high frequency current.

## Claims

1. An electric fusion coupling (10, 31, 33, 44) for connecting plastic members (14, 50) formed from a first plastics material with a first fusion temperature and having a first connecting surface, the coupling comprising a connecting body (12, 35, 41, 46/48) formed from a second plastics material with a second fusion temperature and having a second connecting surface similarly curved to the first connecting surface, whereby the second connecting surface of the connecting body can be positioned closely adjacent the first contacting surface of a member to which it is to be joined to provide a length of overlap therebetween and a temperature self-regulating heating means (11, 17, 18, 19, 21, 37, 45) fully embedded in the connecting body adjacent the second connecting surface for heating the body and the member to which it is to be joined to their fusion temperatures whereby an extensive region of the length of overlap of the connecting body and the member are fused to one another, the heating means including a magnetic alloy body with a high Curie temperature equal to or above the first and second fusion temperatures, and being in the form of either a punched sheet (17) or a mesh (19) or a coil (21).

2. An electric fusion coupling as claimed in Claim 1, wherein the connecting body comprises an annular member (12, 33, 41, 44) which defines, at either end thereof, a socket (16, 43) for receiving a member to be connected (14,50), the second connecting surface comprising the inner surfaces of the annular member around the sockets.

3. An electric fusion coupling as claimed in Claim 2, wherein the annular member comprises a straight cylindrical member (12,44).

4. An electric fusion coupling as claimed in Claim 2, wherein the annular member comprises a cylindrical member (33, 41), one portion of which extends at an angle to the other.

5. An electric fusion coupling as claimed in any one of Claims 2 to 4, wherein the thickness of the ends of the annular member (41) is less than the remainder thereof whereby to define the sockets (43).

6. An electric fusion coupling as claimed in Claim 5, wherein the heating means comprises a pair of heaters (17, 18, 19), each positioned in the annular member and surrounding a respective socket and an intermediate heating section (11 to mutually connect the heaters.

7. An electric fusion coupling as claimed in any one of Claims 2 to 6, wherein the sockets (16) are coextensive whereby the annular member (44) can be joined to a member (50) passing therethrough.

8. An electric fusion coupling as claimed in any one of Claims 2 to 7, wherein the annular member (44) is formed from two separable sections (46, 48).

9. An electric fusion coupling as claimed in Claim 1, wherein the connecting body comprises a saddle shaped member (31), the undersurface (37) of which comprises the second connecting surface.

## Patentansprüche

1. Elektrische Schmelzverbindung (10, 31, 33, 44) zum Verbinden von Kunststoffbauteilen (14, 50), die aus einem ersten Kunststoffmaterial mit einer ersten Schmelztemperatur hergestellt sind und eine erste Verbindungsfläche haben, wobei die Schmelzverbindung einen Verbindungskörper (12, 35, 41, 46/48), der aus einem zweiten Kunststoffmaterial mit einer zweiten Schmelztemperatur hergestellt ist und eine zweite Verbindungsfläche hat, die ähnlich gekrümmt ist wie die erste Verbindungsfläche, wodurch die zweite Verbindungsfläche des Verbindungskörpers eng benachbart zu der ersten Verbindungsfläche eines damit zu verbindenden Bauteils angeordnet werden kann, um dazwischen eine Überlappungslänge zu schaffen, und eine die Temperatur selbst regelnde Heizeinrichtung (11, 17, 18, 19, 21, 37, 45) umfaßt, die nahe der zweiten Verbindungsfläche vollständig in dem Verbindungskörper eingebettet ist, um den Körper und das damit zu verbindende Bauteil auf deren Schmelztemperaturen zu erhitzen, wodurch ein großer Bereich der Überlappungslänge zwischen dem Verbindungskörper und dem Bauteil miteinander verschmolzen wird, wobei die Heizeinrichtung einen Magnetlegierungskörper mit einer hohen Curie-Temperatur, die gleich oder größer ist als die erste und zweite Schmelztemperatur, und die Form entweder einer gelochten Platte (17) oder eines Maschengeflechts (19) oder einer Spule (21) hat.

2. Elektrische Schmelzverbindung nach Anspruch 1, bei der der Verbindungskörper ein ringförmiges Bauteil (12, 33, 41, 44) umfaßt, bei dem an jedem Ende davon eine Fassung (16, 43) ausgebildet ist, um ein zu verbindendes Bauteil (14, 50) aufzunehmen, wobei die zweite Verbindungsfläche die Innenflächen des ringförmigen Bauteils um die Fassungen herum umfaßt.

3. Elektrische Schmelzverbindung nach Anspruch 2, bei der das ringförmige Bauteil ein gerades zylindrisches Bauteil (12, 44) aufweist.

4. Elektrische Schmelzverbindung nach Anspruch 2, bei der das ringförmige Bauteil ein zylindrisches Bauteil (33, 41) aufweist, von dem sich ein Abschnitt bezüglich des anderen mit einem Winkel erstreckt.

5. Elektrische Schmelzverbindung nach einem der Ansprüche 2 bis 4, bei der die Dicke der Enden des ringförmigen Bauteils (41) kleiner ist als der Rest davon, um dadurch die Fassungen (43) zu bilden.

6. Elektrische Schmelzverbindung nach Anspruch 5, bei der die Heizeinrichtung ein Paar Heizelemente (17, 18, 19), von denen jedes in dem ringförmigen Bauteil angeordnet ist und eine zugehörige Fassung umgibt, und einen zwischenliegenden Heizabschnitt (11 enthält, um die Heizelemente gegenseitig zu verbinden.

7. Elektrische Schmelzverbindung nach einem der Ansprüche 2 bis 6, bei der die Fassungen (16) flächengleich sind, wodurch das ringförmige Bauteil (44) mit einem sich dadurch erstreckenden Bauteil (50) verbunden werden kann.

8. Elektrische Schmelzverbindung nach einem der Ansprüche 2 bis 7, bei der das ringförmige Bauteil (44) aus zwei trennbaren Abschnitten (46, 48) gebildet ist.

9. Elektrische Schmelzverbindung nach Anspruch 1, bei der der Verbindungskörper ein sattelförmiges Bauteil (31) enthält, bei dem dessen untere Fläche (37) die zweite Verbindungsfläche umfaßt.

## Revendications

1. Accouplement formé par fusion électrique (10,31,33,44) pour raccorder des éléments en matière plastique (14,50) formés d'une première matière plastique ayant une première température de fusion et ayant une première surface de raccordement, l'accouplement comprenant un corps de raccordement (12,35,41,46/48) formé d'une seconde matière plastique ayant une seconde température de fusion et possédant une seconde surface de raccordement courbée de la même manière que la première surface de raccordement, ce qui a pour effet que la seconde surface de raccordement du corps de raccordement peut être disposée dans une position directement adjacente à la première surface de contact d'un élément auquel elle doit être réunie pour former une longueur de recouvrement entre elles et des moyens (11,17,18, 19,21,37,45) de chauffage à régulation automatique de température, qui sont entièrement enchâssés dans le corps de raccordement au voisinage de la seconde surface de raccordement pour chauffer le corps et l'élément auquel il doit être relié à leurs températures de fusion, ce qui a pour effet de réunir entre eux par fusion le corps de raccordement et l'élément, dans une zone étendue de leur longueur de chevauchement, les moyens de chauffage comprenant un corps formé d'un alliage magnétique ayant une température de Curie élevée égale ou supérieure aux première et seconde températures de fusion, et possédant la forme d'une feuille perforée (17) ou d'un filet (19) ou d'une bobine (21).

2. Accouplement formé par fusion électrique selon la revendication 1, dans lequel le corps de raccordement comprend un élément annulaire (12,33,41,44) qui définit, au niveau de l'une ou l'autre de ses extrémités, une douille (16,43) servant à recevoir un élément devant être raccordé (14,50), la seconde surface de raccordement comprenant les surfaces intérieures de l'élément annulaire entourant les douilles.

3. Accouplement formé par fusion électrique selon la revendication 2, dans lequel l'élément annulaire comprend un élément cylindrique rectiligne (12,44).

4. Accouplement formé par fusion électrique selon la revendication 2, dans lequel l'élément annulaire comprend un élément cylindrique (33,41), dont une partie s'étend en faisant un angle par rapport à l'autre.

5. Accouplement formé par fusion électrique selon l'une quelconque des revendications 2 à 4, dans lequel l'épaisseur des extrémités de l'élément annulaire (41) est inférieure à l'épaisseur du reste de cet élément, de manière à définir les douilles (43).

6. Accouplement formé par fusion électrique selon la revendication 5, dans lequel les moyens de chauffage comprennent un couple de dispositifs de chauffage (17,18,19) positionnés chacun dans l'élément annulaire et entourant une douille respective et une section intermédiaire de chauffage (11) pour raccorder mutuellement les dispositifs de chauffage.

7. Accouplement formé par fusion électrique selon l'une quelconque des revendications 2 à 6, dans lequel les douilles (16) s'étendent sur une même distance, ce qui a pour effet que l'élément annulaire (44) peut être réuni à un élément (50) les traversant.

8. Accouplement formé par fusion électrique selon l'une quelconque des revendications 2 à 7, dans lequel l'élément annulaire (44) est formé de deux sections séparables (46,48).

9. Accouplement formé par fusion électrique selon la revendication 1, dans lequel le corps de raccordement comprend un élément en forme de selle (31), dont la surface inférieure (37) comprend la seconde surface de raccordement.
